# EUROPEAN PATENT APPLICATION

(11) **EP 1 521 425 A1**
(43) Date of publication of application: **06.04.2005**
(21) Application number: 04255793.4
(22) Date of filing: 23.09.2004
(51) Int. Cl.: H04L 29/06

(54) **Reconfiguration method of hardware components of communication terminals**

(30) Priority: 30.09.2003 GB 0322898
(71) Applicant: Kabushiki Kaisha Toshiba, Tokyo 105-8001 (JP)
(72) Inventor: Burgess, Rollo, Bristol BS1 4ND (GB)
(74) Representative: Midgley, Jonathan Lee

(57) **Abstract**

A computer apparatus comprising: a plurality of hardware devices. The apparatus also comprising a representation of a functionality which the apparatus is to implement in terms of a plurality of communicating abstract proxy components, means for locating a concrete proxy component corresponding to each abstract proxy component, each concrete proxy component corresponding also to a respective hardware device of the computer apparatus, and means for controlling each of said corresponding hardware devices through interfaces provided by the plurality of concrete proxy components.

The method is useful for remotely reconfigurating hardware components of wireless terminals like ASICs or digital signal processors.

## Description

The present invention relates to a method for configuring a computer apparatus.

Modem communications terminals typically comprise a heterogeneous collection of hardware devices suited to signal processing. Such devices include Digital Signal Processors (DSPs), Application Specific Integrated Circuits (ASICs), and Reconfigurable Hardware (R-HW).

The rapid growth in the field of communications, and in particular in the field of wireless communications, has resulted in a number of different protocols being adopted. For example, some telecommunications devices use the GSM (Global System for Mobile communication) protocol, while others use UMTS (Universal Mobile telecommunications service) protocol. Conventional communications terminals, comprise fixed signal processing elements which cannot be reconfigured. Such terminals are therefore not able to alter their behaviour so as to handle one protocol in place of an other, and therefore suffer from problems of flexibility.

Software defined radio allows the operation of a device such as a wireless terminal to be defined at runtime by downloading various software components which execute on suitable microprocessors to affect operation of the terminal. Published US Patent Application US2002/0144134A1 (Watanabe et al) describes one such software defined radio system.

In general terms, the transmitted software allows the baseband behaviour of a terminal to be changed. Changes to baseband behaviour can in some cases be total reconfiguration from one protocol to another, for example configuring a terminal to operate using the GSM protocol in place of the UMTS protocol. Alternatively, partial reconfiguration can be carried out, such that behaviour is affected without changing the operating standard.

WO01/90890 (Roke Manor Research Limited) describes a reconfiguration manager for use in reconfiguring a software defined radio terminal. A reconfiguration handler manages requests from various sources and conducts reconfiguration by downloading appropriate software, and executing this software on appropriate devices within the terminal. WO01/90890 also describes an object-oriented implementation in which suitable classes are downloaded and instantiated to provide the necessary functionality. When reconfiguration results in a first class being replaced with a second class, it is explained that dynamic binding is necessary to support changes in functionality, behaviour and interface.

Although software defined radio systems such as those described above provide flexibility, they assume that communications terminals will comprise solely of microprocessors which can execute downloaded software to affect behaviour. Current hardware defined radio is therefore built on an assumption that microprocessors be able to execute the necessary software sufficiently quickly. It is widely accepted that although microprocessor performance is increasing in accordance with Moore's Law (Moore, Gordon E.: "Cramming More Components Onto Integrated Circuits", Electronics, 19 April 1965), the requirements of wireless technologies will always be greater than can be satisfied by contemporaneous microprocessors. Therefore, to implement necessary communications functions some form of hardware acceleration must be employed using hardware devices such as for example ASICs or R-HW. Current software defined radio can not accommodate such devices.

Conventionally, a computer program written in a high level programming language is compiled for use on a specific type of computer. Once compiled the computer program will operate only on that type of computer, and will no longer be portable between different computer types. The now widely used Java® programming language provides portable applications by defining a framework where Java source code is "compiled" to generate Java byte-code. Java byte-code is then interpreted by a Java Virtual Machine (JVM) at runtime. Thus, applications compiled into Java byte-code are readily transportable between computer types, assuming that a JVM is provided for that computer type.

WO/0153932 (Radioscape Limited) describes methods for designing, modelling and performing digital signal processing. More specifically, there is disclosed a virtual machine which allows architecture independent code to be operated on a variety of different DSPs. That is, a virtual machine is provided for a plurality of different DSPs, and code written in a common language can then execute on all these DSPs using the virtual machine. Although such a virtual machine provides considerable benefits in terms of portability of software, the virtual machine must be written to operate on all DSPs, and some low level operations will need to be created individually for all DSPs. Furthermore, WO 01/153932 does not provide a way of providing software defined radio using devices other than microprocessors capable of executing code presented in a well defined instruction set.

It is an object of the present invention to obviate or mitigate at least some of the problems identified above.

According to a first aspect of the present invention, there is provided a computer apparatus comprising:
a plurality of hardware devices;
a plurality of communicating abstract proxy components representing a functionality which the apparatus is to implement;
means for locating for each abstract proxy component a corresponding concrete proxy component, each concrete proxy component corresponding also to a respective hardware device of the computer apparatus; and
means for controlling each of said corresponding hardware devices through interfaces provided by the plurality of concrete proxy components.

The computer apparatus may be a communications terminal.

The locating means may comprise means for searching at least one library containing a plurality of concrete proxy components. At least one library may be stored on a data storage device of the computer apparatus. At least one library may be stored on a data storage device remote from the computer apparatus. The computer apparatus may communicate with the at least one library stored on a data storage device remote from the computer apparatus using a wireless link.

At least one hardware device may be an application specific integrated circuit (ASIC), at least one hardware device may be a reconfigurable hardware element, and at least one hardware device may be a digital signal processor.

At least one concrete proxy component may include a configuration for a corresponding hardware device.

The interface provided by a concrete proxy component may be defined by the corresponding abstract proxy component. At least one abstract proxy component may define at least one method which is implemented by the or each corresponding concrete proxy component. At least one abstract proxy component may implement an interface comprising at least one method. Each concrete proxy component corresponding to the at least one abstract proxy component may provide an implementation for the said at least one method. The plurality of abstract proxy components may be implemented as abstract classes. The or each concrete proxy component corresponding to a respective abstract proxy component is a child of the abstract class representing that abstract proxy component. The abstract proxy components may be abstract Java® classes and said concrete proxy components may be Java® classes.

According to a further aspect of the present invention, there is provided a method for configuring a computer apparatus comprising a plurality of hardware devices, wherein the method comprises:
obtaining a plurality of communicating abstract proxy components representing a functionality which the apparatus is to implement;
locating for each abstract proxy component a corresponding concrete proxy component, each concrete proxy component corresponding also to a respective hardware device of the computer apparatus; and
controlling each of said corresponding hardware devices through interfaces provided by the plurality of concrete proxy components.

The invention also provides a data carrier carrying computer readable program code means to cause a computer comprising a plurality of hardware devices to:
obtain a plurality of communicating abstract proxy components representing a functionality which the apparatus is to implement;
locate for each abstract proxy component a corresponding concrete proxy component, each concrete proxy component corresponding also to a respective hardware device of the computer apparatus; and
control each of said corresponding hardware devices through interfaces provided by the plurality of concrete proxy components.

According to a second aspect of the present invention, there is provided a method for configuring a computer apparatus comprising first and second hardware devices, the first hardware device defining a first control protocol and the second hardware device defining a second different control protocol and the method comprising:
defining an interface for an entity which implements a functionality of the computer apparatus by means of an abstract proxy component;
defining a first implementation for the entity using a first concrete proxy component which is associated with the first hardware device and comprises means to control said first hardware device; and
defining a second implementation for the entity using a second concrete proxy component which is associated with the second hardware device, and comprises means to control said second hardware device;
wherein the abstract proxy component and the first and second concrete proxy components define a common control protocol.

The computer apparatus may be a communications device.

The abstract proxy component may be represented by an abstract class. Each concrete proxy component may be represented by a class which is a child of the said abstract class. The abstract class may implement an interface defining at least one public method. The term "method" is used in its usual object oriented sense to denote what in an imperative programming language is referred to as a function.

The method may be implemented using the Java® programming language.

According to a further aspect of the present invention, there is provided a computer apparatus comprising:
first and second hardware devices, the first hardware device defining a first control protocol and the second hardware device defining a second different control protocol;
means for defining an interface for entity which implements a functionality of the computer apparatus by means of an abstract proxy component;
means for defining a first implementation for the entity using a first concrete proxy component which is associated with the first hardware device and which comprises means to control said first hardware device; and
means for defining a second implementation for the entity using a second concrete proxy component being associated with the second hardware device, and comprising means to control said second hardware device;
wherein the abstract proxy component and the first and second concrete proxy components define a common control protocol.

The present invention further provides a data carrier carrying computer readable program code means to cause a computer apparatus comprising first and second hardware devices, the first hardware device defining a first control protocol and the second hardware device defining a second different control protocol to:
define an interface entity which implements a functionality of the computer apparatus by means of an abstract proxy component;
define a first implementation for the entity using a first concrete proxy component being associated with the first hardware device; and
define a second implementation for the entity using a second concrete proxy component being associated with the second hardware device, and comprising means to control said second hardware device;
wherein the abstract proxy component and the first and second concrete proxy components define a common control protocol.

In the present specification terms normally used in connection with the Java® programming language are used to describe features of the invention. It will be appreciated that the invention is in no way restricted to an implementation using the Java programming language, and terms used to refer to features of the Java programming language should be construed so as to include any equivalent feature of any other programming language.

Embodiments of the present invention will now be described, by way of example, with reference to the accompanying drawings, in which:
Figure 1 is a schematic illustration of a network of communicating wireless communications terminals;
Figure 2 is a schematic illustration showing configuration of the communications terminals of Figure 1, in accordance with the present invention;
Figure 3 is a schematic illustration of part of a communications terminal of Figures 1 and 2 showing configuration in accordance with the present invention in further detail;
Figure 4 is a schematic illustration of the algorithm map of Figure 3; and
Figure 5 is a UML class diagram showing classes used in the configuration of Figure 3.

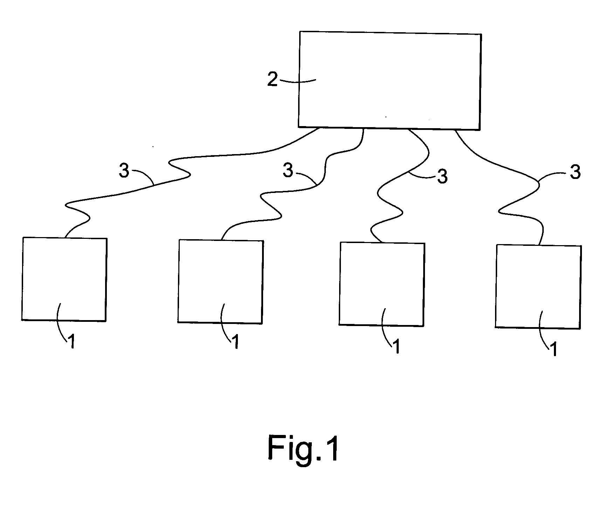

Referring first to Figure 1, there is illustrated a plurality of communications terminals 1, which are configured to communicate with one another, and with other communications terminals not shown in Figure 1. It will be appreciated that the communications terminals can communicate using either wireless or wired means, and may communicate using any one of the wide variety of available communications protocols. Each terminal may, for example, be a mobile telephone, a computer such as a laptop containing suitable communications hardware, or a handheld computer incorporating a mobile telephone.

Figure 1 also includes a configuration device 2 which communicates with the terminals 1 using wired, or more preferably wireless connection means 3. In a known software defined radio system, the configuration device 2 transmits software to one of the communications terminals 1 to affect behaviour of that communications terminal. The software is then executed on microprocessors within the terminal to affect behaviour of the terminal.

The present invention allows the behaviour of the terminal to be affected not only by executing downloaded software on microprocessors within the terminal, but also by configuring suitable hardware accelerators such as Application Specific Integrated Circuits (ASICs) or Reconfigurable Hardware (R-HW).

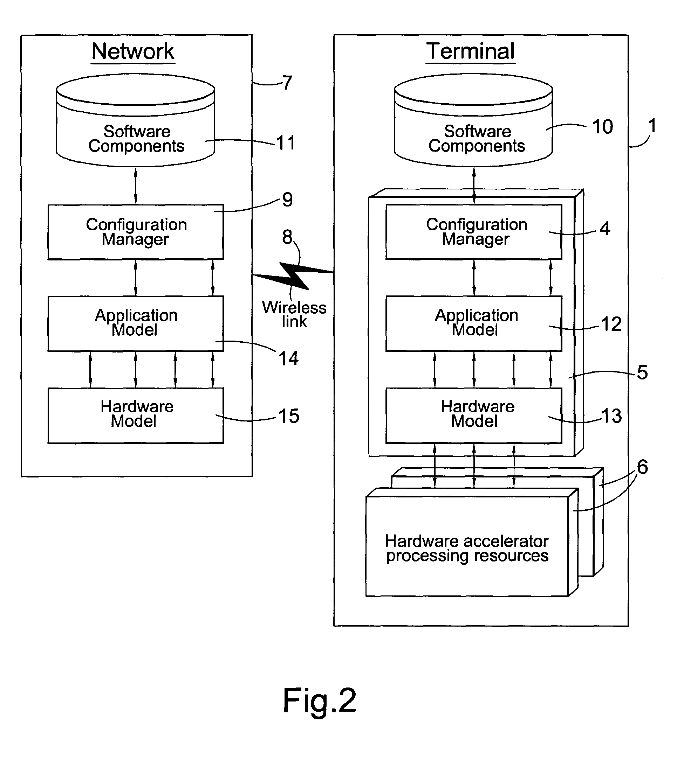

Figure 2 illustrates configuration in accordance with the present invention. The terminal 1 comprises a local configuration manager 4 executing on a control processor 5. In general, the control processor 5 runs control tasks to affect behaviour of the terminal 1. The terminal 1 also comprises a plurality of hardware accelerator processing resources 6 which are dedicated to signal processing tasks. The hardware accelerator processing resources 6 will typically comprise a heterogeneous collection of hardware devices including digital signal processors (DSPs) which are microprocessors capable of executing code specified in a well defined instruction set, and ASICs which are configured using various parameters.

The terminal communicates with a remote network node 7 by means of a wireless link 8. The network node comprises a remote configuration manager 9 which can be accessed by the terminal 1 by means of the wireless link 8.

The local configuration manager 4 has access to a software component library 10. The remote configuration manager 9 has access to a remote software component library 11. Both the local and remote libraries 10, 11 store details of devices and configurations for those devices which cause the devices to operate in various ways. The remote software component library 11 is typically the master library, to which new devices and device configurations are added. The local software component library 10 contains details of devices and device configurations which are in use or have been used by the terminal 1.

Additionally, the local software component library 10 contains device configurations required for default behaviour. Data can be copied between the remote software component library 11 and the local software component library 10 as necessary under the control of the configuration managers 4,9.

In the configuration shown in Figure 2 the system comprises both a local configuration manager 4 and a remote configuration manager 9 which communicate over the wireless link 8. However, it will be appreciated that in some embodiments of the present invention, configuration of the terminal 1 can be carried out solely by the remote configuration manager 9 communicating with the terminal over the wireless link 8, or alternatively solely by the local configuration manager 4.

Configuration using the architecture illustrated in Figure 2 allows not only the use of microprocessors such as DSPs, as in conventional software defined radio, but also the use of faster hardware devices such as ASICs.

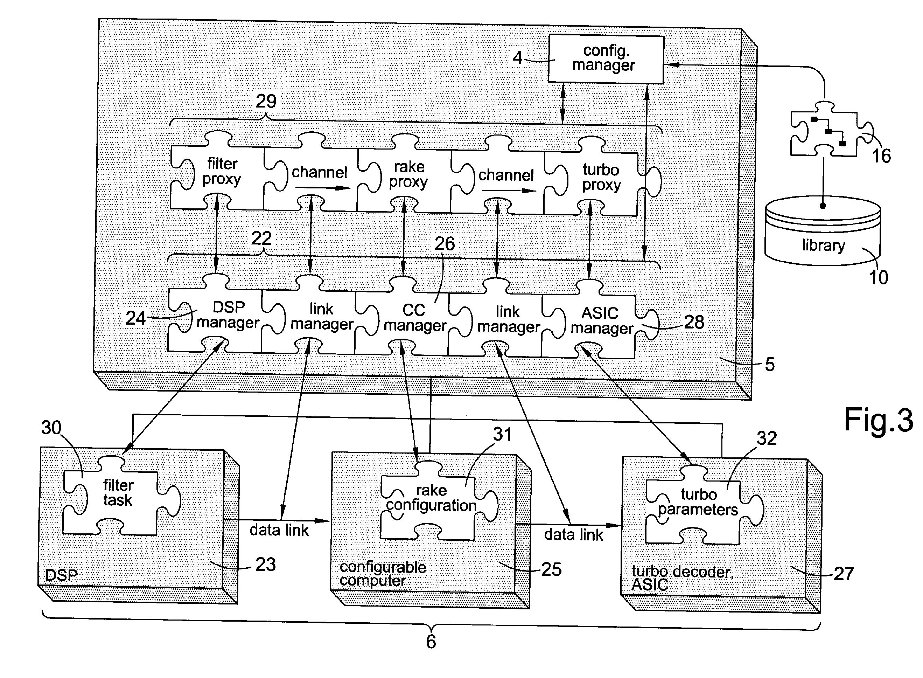

The local configuration manager 4 builds application models 12 and hardware models 13 which are built and manipulated using the control processor 5. The remote configuration manager 9 also has application models 14 and hardware models 15. The function of these models in the configuration of the terminal 1 is described below with reference to Figure 3.

Figure 3 illustrates configuration of the terminal 1, where the terminal is to implement UMTS radio behaviour. An algorithm map 16 representing UMTS base band behaviour is retrieved from the local library 10 by the local configuration manager 4 executing on the control processor 5. This algorithm map describes the functions required to implement UMTS behaviour in terms of a data flow model. The algorithm map 16 describes structure (i.e. the manner in which components are connected to provide the necessary functions) and the interface which each component is required to provide. The algorithm map 16 provides this modelling by representing each required component as an abstract proxy component. Each abstract proxy component defines an interface, but no implementation. It is the function of the configuration manager 4 to locate concrete proxy components which provide the interface defined by the abstract proxy, together with an associated implementation. These concrete proxy components provide the software necessary to implement the behaviour of the algorithm map 16. This process is described below.

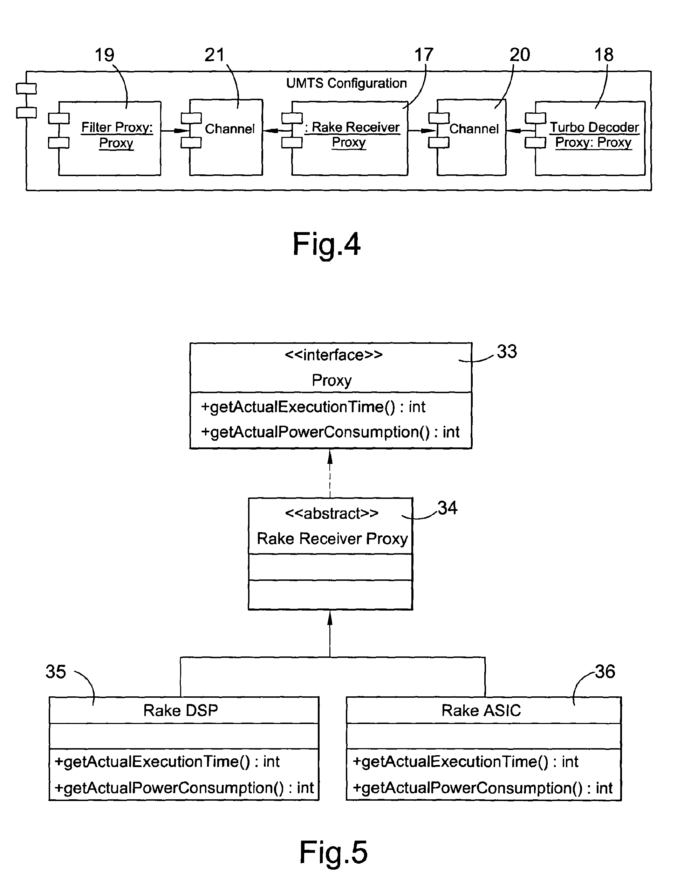

The algorithm map 16 of Figure 3 is shown in further detail in Figure 4. It can be seen that UMTS behaviour is defined using three abstract proxy components: a rake receiver proxy 17, a turbo decoder proxy 18 and a filter proxy 19. The rake receiver proxy 17 is connected to the turbo decoder proxy 18 by an abstract channel component 20. The rake receiver proxy 17 is connected to the filter proxy 19 by an abstract channel component 21.

Referring again to Figure 3, the configuration manager builds and manages a hardware model 22 representing hardware available on the communications terminal which is being configured. This hardware model 22 models each component of the terminal. In the example of Figure 3, it can be seen that the hardware accelerator resources 6 of the terminal comprise a DSP 23 under the control of a DSP manager 24, a configurable computer (CC) 25 (an example of R-HW mentioned above) under the control of a CC Manager 26, and an ASIC 27 under the control of an ASIC manager 28.

The configuration manager 4 must locate in the library 10 (or the remote library 11 of Figure 2), a suitable concrete proxy component for each function defined by an abstract proxy component in the algorithm map of Figure 4. Each concrete proxy component must correspond to a hardware device of the hardware model 22. When suitable concrete proxy components have been located, an application model 29 is created which is a runtime model of concrete proxy components corresponding to the abstract proxy components specified in the algorithm map 16 is created. Each concrete proxy component interfaces with a corresponding component of the hardware model 22 to allow control of the appropriate hardware accelerator resource 6.

The hardware accelerator resources 6 may be configured in different ways. For example, to configure the DSP 23 to provide filter functionality, a block of code 30 written in the DSP's instruction set is executed on the DSP. To configure the CC 25 to implement a rake receiver, suitable configuration data 31 must be provided to the CC, while the ASIC 27 requires suitable parameters 32 to operate as a turbo decoder. The appropriate configuration data is linked to the respective concrete proxy component within the application model 29, and supplied to the appropriate manager in the hardware model 22 for configuration of the corresponding hardware accelerator resource 6.

It can be seen from the description set out above that a concrete proxy component provides an interface as defined by the abstract proxy to which it corresponds, while providing means for addressing a specific hardware accelerator. Thus, the architecture provides a mechanism for addressing a plurality of different hardware implementations of any given component by means of a respective concrete proxy component, each concrete proxy component defining a common interface to higher level functions. Thus, terminal behaviour can be reconfigured using not only DSPs as in the case of conventional software defined radio, but also using hardware accelerator elements such as ASICs or CCs, assuming that an appropriate concrete proxy component is provided. All concrete proxies are handled in the same way by the configuration manager 4, and higher level functions can address components in common manner regardless of their underlying implementations.

The application model 29 is one of the application models 12 of Figure 2, and the hardware model 22 is one of the hardware models 13 of Figure 2. However, if configuration is carried out by the remote configuration manager 9, the application model 29 would then be one of the models 14 of Figure 2 and the hardware model 22 would be one of the models 15 of Figure 2.

Figure 5 is a UML class diagram showing the hierarchical relationships between the components described above. At the top of the hierarchy a Proxy interface 33 which defines two public methods. As in the Java Programming language, interfaces define methods which are implemented by classes declared as implementing the interface. The interface itself contains no more than a method header (similar to a function prototype) with no implementation of the method. The use of interfaces in Java will be readily understood by those skilled in the art, and is described in Flanagan, D.: "Java in a nutshell", 2^{nd} Edition, O'Reilly, 1997, pages 77 to 80, this description is herein incorporated by reference.

Figure 5 shows that an abstract class RakeReceiverProxy 34 implements the Proxy interface. This means that all instances of this class must provide the public methods described above or delegate provision of these methods to its children. Given that the RakeReceiverProxy class is abstract it can never be instantiated itself, but merely serves as an extra layer in the class hierarchy, and can act as a parent of other classes, any class which is a child of RakeReceiverProxy must then implement any methods specified either in the Proxy interface 33 of the RakeReceiverProxy class 34, for which no implementation is provided in the class 33. This use of abstract classes in an object oriented inheritance hierarchy will be readily understood by those skilled in the art, and is described in Java in a Nutshell, referenced above, at pages 49 to 101.

Any class having RakeReceiverProxy as its parent must provide the methods getActualExectionTime() and getActualPowerConsumption() specified by the Proxy interface, given that the RakeReceiverProxy does not implement these methods itself. Thus, the RakeReceiverProxy class delegates implementation of these methods to its children.

In Figure 5, the RakeReceiverProxy class has two child classes RakeDSP 35 and RakeASIC 36. Both these concrete classes implement the getActualExectionTime() and getActualPowerConsumption() specified in the ProxyInterface 33. Any concrete proxy component representing a rake receiver is a child of the abstract class 34. Thus all proxy components representing rake receivers present a unified interface to the outside world.

The RakeDSP class 35 is a concrete proxy component which implements a rake receiver on a DSP. The RakeASIC class 36 is a concrete proxy component which implements a rake receiver on an ASIC. Thus the classes 35, 36 could be included in an application model of the form illustrated in Figure 3.

In the description set out above, the algorithm map has been described as being implemented in terms of a plurality of abstract proxy components, each of which is an abstract Java class. It will be appreciated that the algorithm map can be implemented in any number of ways which provide the necessary behavioural specification. For example, in some embodiments of the invention, the algorithm map is implemented as a plain text document, written in accordance with a predefined syntax.

It will be appreciated that in some embodiments of the present invention, a plurality of different algorithm maps may be provided, each corresponding to a different functionality which the terminal is to implement. In such embodiments, the terminal can be reconfigured by selecting an appropriate algorithm map from a library and building an application model containing concrete proxy components corresponding to the abstract proxy components of that algorithm map. For example, algorithm maps for both GSM and UMTS functionality can be provided, and the terminal can then be configured to provide either functionality by creating an appropriate application model in the manner described above. It will be appreciated that in some circumstances it may be desirable for a plurality of application models to be created for use in parallel, so that, for example, both GSM and UMTS functionality can be provided concurrently.

Although parts of the description set out above make reference to the Java programming language, it will be readily appreciated by one skilled in the art that any other object oriented programming language could be used in a similar way. Furthermore, the invention is not restricted to an object oriented implementation, but could be implemented, in any suitable computer programming language.

## Claims

1. A computer apparatus comprising:
a plurality of hardware devices;
a plurality of communicating abstract proxy components representing a functionality which the apparatus is to implement;
means for locating for each abstract proxy component a corresponding concrete proxy component, each concrete proxy component corresponding also to a respective hardware device of the computer apparatus; and
means for controlling each of said corresponding hardware devices through interfaces provided by the plurality of concrete proxy components.

2. A computer apparatus according to claim 1, wherein the computer apparatus is a communications terminal.

3. A computer apparatus according to claim 1 or 2, wherein the locating means comprises means for searching at least one library containing a plurality of concrete proxy components.

4. A computer apparatus according to claim 3, wherein at least one library is stored on a data storage device of the computer apparatus.

5. A computer apparatus according to claim 3 or 4, wherein at least one library is stored on a data storage device remote from the computer apparatus.

6. A computer apparatus according to claim 5, wherein the computer apparatus communicates with the at least one library stored on a data storage device remote from the computer apparatus using a wireless link.

7. A computer apparatus according to any preceding claim, wherein at least one hardware device is an application specific integrated circuit (ASIC).

8. A computer apparatus according to any preceding claim, wherein at least one hardware device is a reconfigurable hardware element.

9. A computer apparatus according to any preceding claim, wherein at least one hardware device is a digital signal processor.

10. A computer apparatus according to any preceding claim, wherein at least one concrete proxy component includes a configuration for a corresponding hardware device.

11. A computer apparatus according to any preceding claim, wherein the interface provided by a concrete proxy component is defined by the corresponding abstract proxy component.

12. A computer apparatus according to any preceding claim, wherein at least one abstract proxy component defines at least one method which is implemented by the or each corresponding concrete proxy component.

13. A computer apparatus according to any preceding claim, wherein at least one abstract proxy component implements an interface comprising at least one method.

14. A computer apparatus according to claim 13, wherein each concrete proxy component corresponding to the at least one abstract proxy component provides an implementation for the said at least one method.

15. A computer apparatus according to any preceding claim, wherein the plurality of abstract proxy components are implemented as abstract classes.

16. A computer apparatus according to claim 15, wherein the or each concrete proxy component corresponding to a respective abstract proxy component is a child of the abstract class representing that abstract proxy component.

17. A computer apparatus according to any preceding claim, wherein said abstract proxy components are abstract Java® classes and said concrete proxy components are Java® classes.

18. A method for configuring a computer apparatus comprising a plurality of hardware devices, wherein the method comprises:
obtaining a plurality of communicating abstract proxy components representing a functionality which the apparatus is to implement;
locating for each abstract proxy component a corresponding concrete proxy component, each concrete proxy component corresponding also to a respective hardware device of the computer apparatus; and
controlling each of said corresponding hardware devices through interfaces provided by the plurality of concrete proxy components.

19. A method according to claim 18, wherein the computer apparatus is a communications terminal.

20. A method according to claim 18 or 19, wherein the locating means comprises means for searching at least one library containing a plurality of concrete proxy components.

21. A method according to claim 20, wherein at least one library is stored on a data storage device of the computer apparatus.

22. A method according to claim 20 or 21, wherein at least one library is stored on a data storage device remote from the computer apparatus.

23. A method according to claim 22, wherein the computer apparatus communicates with the at least one library stored on a data storage device remote from the computer apparatus using a wireless link.

24. A method according to any one of claims 18 to 23, wherein at least one hardware device is an application specific integrated circuit (ASIC).

25. A method according to any one of claims 18 to 24, wherein at least one hardware device is a reconfigurable hardware element.

26. A method according to any one of claims 18 to 25, wherein at least one hardware device is a digital signal processor.

27. A method according to any one of claims 18 to 26, wherein at least one concrete proxy component includes a configuration for a corresponding hardware device.

28. A method according to any one of claims 18 to 27, wherein the interface provided by a concrete proxy component is defined by the corresponding abstract proxy component.

29. A method according to any one of claims 18 to 28, wherein at least one abstract proxy component defines at least one method which is implemented by the or each corresponding concrete proxy component.

30. A method according to any one of claims 18 to 29, wherein at least one abstract proxy component implements an interface comprising at least one method.

31. A method according to claim 30, wherein each concrete proxy component corresponding to the at least one abstract proxy component implements the said at least one method.

32. A method according to any one of claims 18 to 31, wherein the plurality of abstract proxy components are implemented as abstract classes.

33. A method according to claim 32, wherein the or each concrete proxy component corresponding to a respective abstract proxy component is a child of the abstract class representing that proxy component.-

34. A method according to any one of claims 18 to 33, wherein said abstract proxy components are abstract Java® classes and said concrete proxy components are Java® classes.

35. A data carrier carrying computer readable program code means to cause a computer comprising a plurality of hardware devices to:
obtain a plurality of communicating abstract proxy components representing a functionality which the apparatus is to implement;
locate for each abstract proxy component a corresponding concrete proxy component, each concrete proxy component corresponding also to a respective hardware device of the computer apparatus; and
control each of said corresponding hardware devices through interfaces provided by the plurality of concrete proxy components.

36. A data carrier carrying computer readable program code means to cause a computer comprising a plurality of hardware devices to execute procedure in accordance with the method of any one of claims 18 to 34.

37. A method for configuring a computer apparatus comprising first and second hardware devices, the first hardware device defining a first control protocol and the second hardware device defining a second different control protocol and the method comprising:
defining an interface for an entity which implements a functionality of the computer apparatus by means of an abstract proxy component;
defining a first implementation for the entity using a first concrete proxy component which is associated with the first hardware device, and comprises means to control said first hardware device; and
defining a second implementation for the entity using a second concrete proxy component which is associated with the second hardware device, and comprises means to control said second hardware device;
wherein the abstract proxy component and the first and second concrete proxy components define a common control protocol.

38. A method according to claim 37, wherein the computer apparatus is a communications device.

39. A method according to claim 37 or 38, wherein the abstract proxy component is represented by an abstract class.

40. A method according to claim 39, wherein each concrete proxy component is represented by a class which is a child of the said abstract class.

41. A method according to claim 39 or 40 wherein the abstract class implements an interface defining at least one public method.

42. A method according to any one of claims 37 to 41, wherein the method is implemented using the Java® programming language.

43. A computer apparatus comprising:
first and second hardware devices, the first hardware device defining a first control protocol and the second hardware device defining a second different control protocol;
means for defining an interface for an entity which implements a functionality of the computer apparatus by means of an abstract proxy component;
means for defining a first implementation for the entity using a first concrete proxy component which is associated with the first hardware device and which comprises means to control said first hardware device; and
means for defining a second implementation for the entity using a second concrete proxy component being associated with the second hardware device, and comprising means to control said second hardware device;
wherein the abstract proxy component and the first and second concrete proxy components define a common control protocol.

44. A computer apparatus according to claim 43, wherein the computer apparatus is a communications device.

45. A computer apparatus according to claim 43 or 44, wherein the abstract proxy component is represented by an abstract class.

46. A computer apparatus according to claim 45, wherein each concrete proxy component is represented by a class which is a child of the said abstract class.

47. A computer apparatus according to claim 45 or 46 wherein the abstract class implements an interface defining at least one public method.

48. A data carrier carrying computer readable program code means to cause a computer apparatus comprising first and second hardware devices, the first hardware device defining a first control protocol and the second hardware device defining a second different control protocol to:
define an interface for an entity which implements a functionality of the computer apparatus using an abstract proxy component;
define a first implementation for the entity using a first concrete proxy component being associated with the first hardware device; and
define a second implementation for the entity using a second different concrete proxy component being associated with the second hardware device, and comprising means to control said second hardware device;
wherein the abstract proxy component and the first and second concrete proxy components define a common control protocol.

49. A data carrier carrying computer readable program code means to cause a computer comprising a plurality of hardware devices to execute procedure in accordance with the method of any one of claims 37 to 42.
